# EUROPEAN PATENT APPLICATION

(11) **EP 1 710 614 A1**
(43) Date of publication of application: **11.10.2006**
(21) Application number: 06007381.4
(22) Date of filing: 07.04.2006
(51) Int. Cl.: G02B 27/28

(54) **Heat radiating quartz plate, polarizer, and optical apparatus**

(30) Priority: 08.04.2005 JP 2005112431
(71) Applicant: Epson Toyocom Corporation, Saiwai-ku Kawasaki-shi Kanagawa 212-8513 (JP)
(72) Inventor: Isomura, Tomoki c/o Epson Toyocom Corp., Kamiina-gun Nagano-ken 399-4696 (JP); Matsumoto, Hiroshi c/o Epson Toyocom Corp., Kamiina-gun Nagano-ken 399-4696 (JP)
(74) Representative: HOFFMANN EITLE

(57) **Abstract**

A heat radiating quartz plate (1) is disposed on the surface of a polarizing plate (10). In the heat radiating quartz plate (1), a metal film (5) is disposed along an outer periphery of a quartz plate which corresponds to the outside (10b) of an effective optical range of the polarizing plate (10).

## Description

### BACKGROUND

### 1. Technical Field

The present invention relates to a heat radiating quartz plate which is disposed on a polarizer, for effectively radiating heat generated from the polarizer used in a liquid crystal projector, and the polarizer having the heat radiating quartz plate. Further, the invention relates to an improvement of an optical apparatus having the polarizer.

### 2. Related Art

A liquid crystal projector has a structure, in which light emitted from a light source is modulated according to image information by using a liquid crystal light valve and the modulated light is projected onto a screen. The liquid crystal light valve is formed such that a polarizing plate is bonded to an incident surface of the liquid crystal panel or a light-emitting surface of the liquid crystal panel and light from the light source is converted into a polarized light by the polarizer so as to use the light efficiently. The polarizing plate generates heat when light components other than a light component in a polarizing axis direction are blocked, but the polarizing plate is prone to be distorted or deteriorated by the generated heat, which may degrade optical characteristics of the polarizing plate.

In order to solve the problems, according to the related art, a transparent glass plate is bonded to the polarizing plate, but heat radiating efficiency is not sufficient for the glass plate. Therefore, recently, a sapphire substrate having high heat conductivity is bonded to the polarizing plate so as to improve heat radiating efficiency.

However, it is difficult to manufacture the sapphire substrate and it is expensive to manufacture the sapphire substrate. In JP-A-2002-14419, there is proposed a projector which uses a quartz plate that has higher conductivity than glass and is less expensive than sapphire.

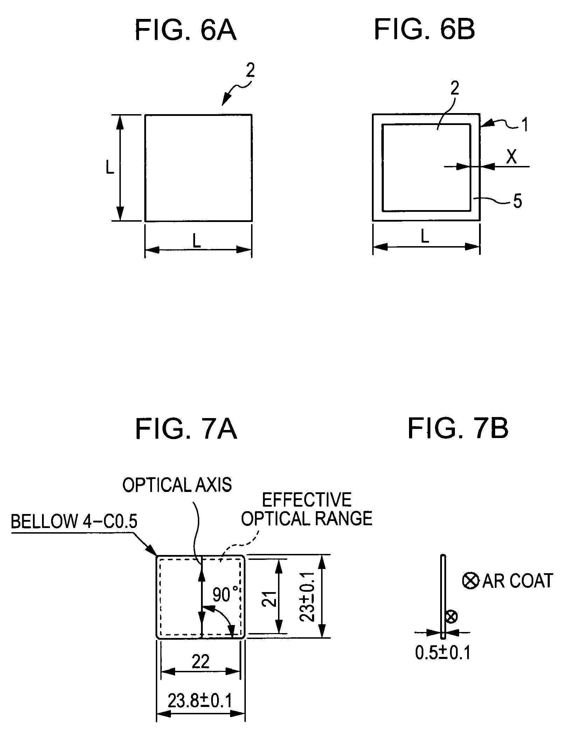

Figs. 7A and 7B are front and side views showing the configuration of a heat radiating quartz plate according to the related art. In the quartz plate, the inside of a dotted line indicated along an outer periphery of the quartz plate is set to be the effective optical range, the outside of the dotted line is set to be the non-effective optical range, and an optical axis is orthogonal to a lower side (bottom). In addition, one surface is formed with anti-reflection film (AR coat).

However, since the heat-radiation effect of the quartz plate solely depends on heat conductivity of quartz material thereof, the area of the quartz plate must be increased in order to improve heat-radiation effect while consistently keeping the thickness of the plate. As a result, there is limitation in improving heat radiating efficiency while satisfying the demands of small size, high integration, and high power of various optical components of a liquid crystal projector.

### SUMMARY

An advantage of some aspects of the invention is that it provides a heat radiating quartz plate, a polarizing plate, and an optical mechanism, which can significantly improve heat radiating efficiency without increasing the area of the quartz plate, to radiate heat generated from the polarizing plate that is disposed and used in a liquid crystal panel of an optical system of a liquid crystal projector or the like.

According to an aspect of the invention, a heat radiating quartz plate disposed on the surface of a polarizing plate includes a metal film which is disposed along an outer periphery of a quartz plate corresponding to the outside of an effective optical range of the polarizing plate.

In the above configuration, the metal film may be formed along a periphery of at least one main surface of the quartz plate.

In the above configuration, the metal film may be formed along at least portions of the periphery of the quartz plate.

According to another aspect of the invention, a polarizing plate includes the heat radiating quartz plate of the above aspect.

According to still another aspect of the invention, an optical mechanism includes the polarizing plate according to the above aspect.

According to the aspects of the invention, in a quartz plate which is disposed on a polarizer, for effectively radiating heat of the polarizer disposed and used in a liquid crystal projector, a metal film is disposed along an outer periphery of a quartz plate which corresponds to the outside of an effective optical range of the quartz plate. Therefore, it is possible to improve the heat radiating efficiency without increasing the area of the heat radiating quartz plate.

### BRIEF DESCRIPTION OF THE DRAWINGS

The invention will be described with reference to the accompanying drawings, wherein like numbers reference like elements.

Fig. 1A is an exploded perspective view showing the relationship between a heat radiating quartz plate and a polarizing plate according to a first embodiment of the invention.

Fig. 1B is a perspective view showing the main configuration of the heat radiating quartz plate.

Fig. 1C is a cross-sectional view showing the heat radiating quartz plate taken along the line IC-IC of Fig. 1B.

Figs. 2A to 2D are cross-sectional views showing other examples of a forming pattern of a metal film.

Fig. 3A is a diagram showing quartz raw stone.

Fig. 3B is a diagram showing the configuration of a lumbered quartz.

Fig. 3C is a diagram showing the lumbered quartz in which a groove is formed on an outer peripheral surface in a Y direction as a marker.

Fig. 3D is a diagram showing the order in which the lumbered quartz is cut along a cut surface L that is parallel to an X axis and a Z axis with the Y axial direction pitch at constant intervals.

Fig. 3E is a diagram showing a piece of the quartz plate.

Figs. 4A to 4D are explanatory views showing each layer of a deposition jig and the configuration of the deposition jig.

Fig. 5A is a cross-sectional view showing a state in which the quartz plate is supported on a small protrusion provided on an intermediate layer of the disposition jig.

Figs. 5B and 5C are diagrams showing a state in which a metal film is formed by attaching metal material to the quartz substrate supported by the deposition jig in a deposition furnace.

Figs. 6A and 6B are diagrams showing a state before and after a metal film made of aluminum is formed on the quartz plate.

Figs. 7A and 7B are explanatory views showing the configuration of the heat radiating quartz plate according to the related art.

### DESCRIPTION OF EXEMPLARY EMBODIMENTS

Hereinafter, a preferred embodiment of the invention will be described with reference to the accompanying drawings.

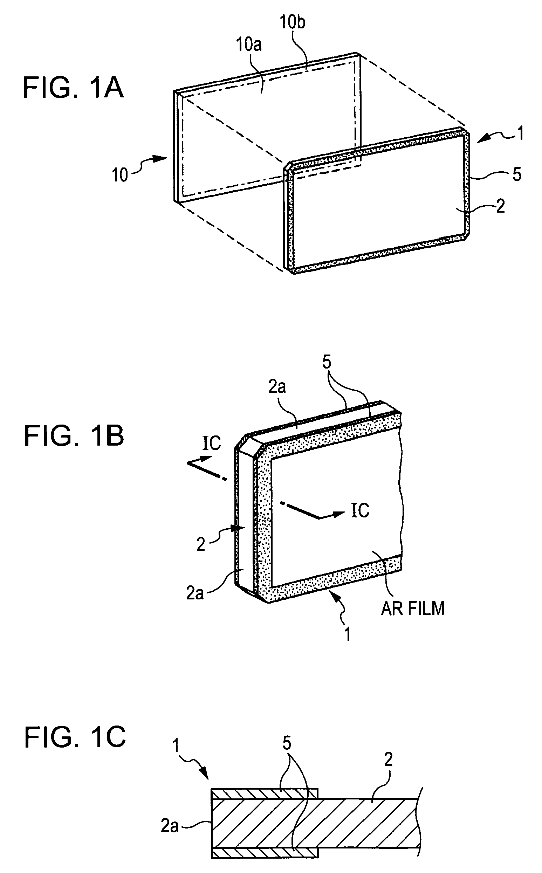

Fig. 1A is an exploded perspective view showing the relationship between a heat radiating quartz plate and a polarizing plate according to a first embodiment of the invention, Fig. 1B is a main perspective view showing the configuration of the heat radiating quartz plate, and Fig. 1C is a cross-sectional view showing the heat radiating quartz plate taken along the line IC-IC of Fig. 1B. A heat radiating quartz plate 1 is, for example, heat radiating means to be disposed on one side or both sides of a polarizing plate 10 in order to improve heat radiating efficiency of the polarizing plate 10 which is disposed on either side of an incident surface or a light-emitting surface of a liquid crystal panel in a liquid crystal projector, and a metal film 5 is disposed along an outer periphery of a quartz plate 2 which corresponds to the outside 10b of an effective optical range of the polarizing plate 10.

That is, in this embodiment, the heat radiating quartz plate 1 is bonded onto one side of the rectangular polarizing plate 10 using an adhesive, etc., the inside of a boundary line indicated by a dotted line is an effective optical range. The metal film 5 is formed along the outside 10b of the effective optical range of the polarizing 10 so as to make the effective optical range of the polarizing plate 10 equal to the effective optical range of the quartz plate 1.

As shown in Figs. 1B and 1C, according to the present embodiment, the metal film 5 is formed along the outer periphery of both main surfaces of the quartz plate 2. More specifically, the metal film 5 is formed in strips along the outer periphery of both main surfaces of the quartz plate 2, except for an outer peripheral surface (side surface) of the quartz plate 2. According to the present embodiment, even though four corners of the quartz plate 2 are provided with chamfering portions so as to prevent an wear of the four corners, the four corners need not be provided with the chamfering portion.

In addition, in fact, an anti-reflection film (AR film) is formed on at least one of the main surfaces of the quartz plate 2.

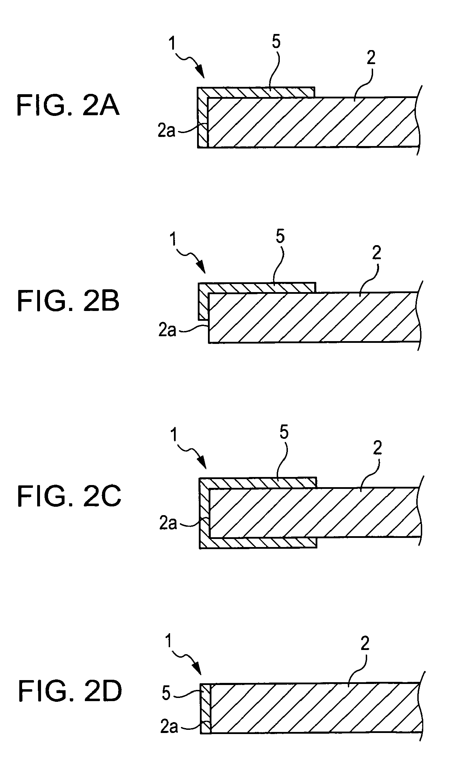

Next, Figs. 2A to 2D are cross-sectional views showing other examples of a forming pattern of the metal film 5. First, according to the example of Fig. 2A, the metal film 5 is continuously formed over a portion of the outer periphery of one main surface of the quartz plate 2 and the entire outer peripheral surface 2a of the quartz plate.

The metal film 5 of Fig. 2B is continuously formed over the portion of the periphery of one main surface of the quartz plate 2 and a portion (about half the peripheral surface in this embodiment) of the peripheral surface 2a of the quartz plate.

The metal film 5 of Fig. 2C is continuously formed over portions of the outer peripheries of both main surfaces of the quartz plate 2 and the entire peripheral surface 2a of the quartz plate.

The metal film 5 of Fig. 2D is continuously formed over the entire peripheral surface 2a of the quartz plate.

The metal film 5, according to the individual embodiments, may be formed over the entire peripheral surface 2a in a longitudinal direction (peripheral direction), and may leave some portions uncovered.

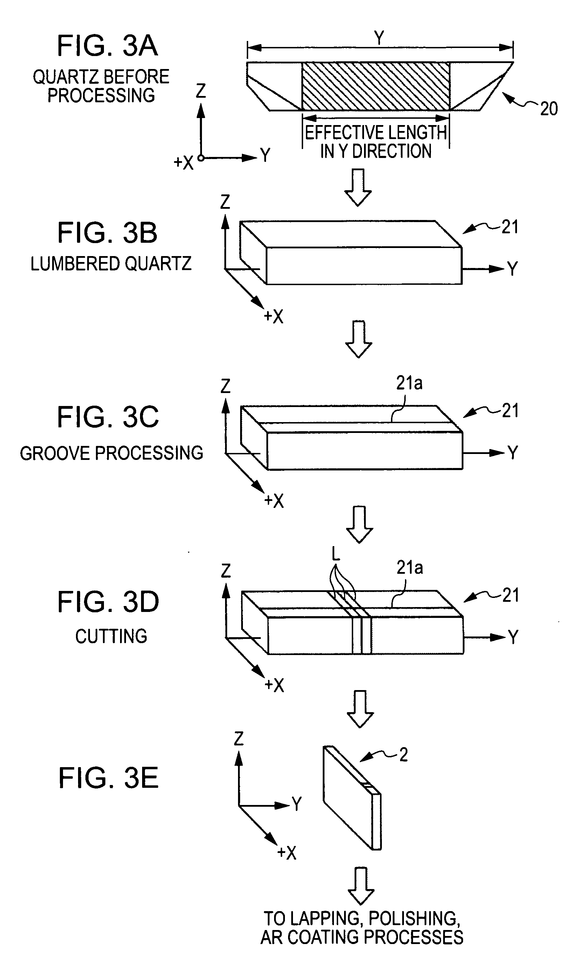

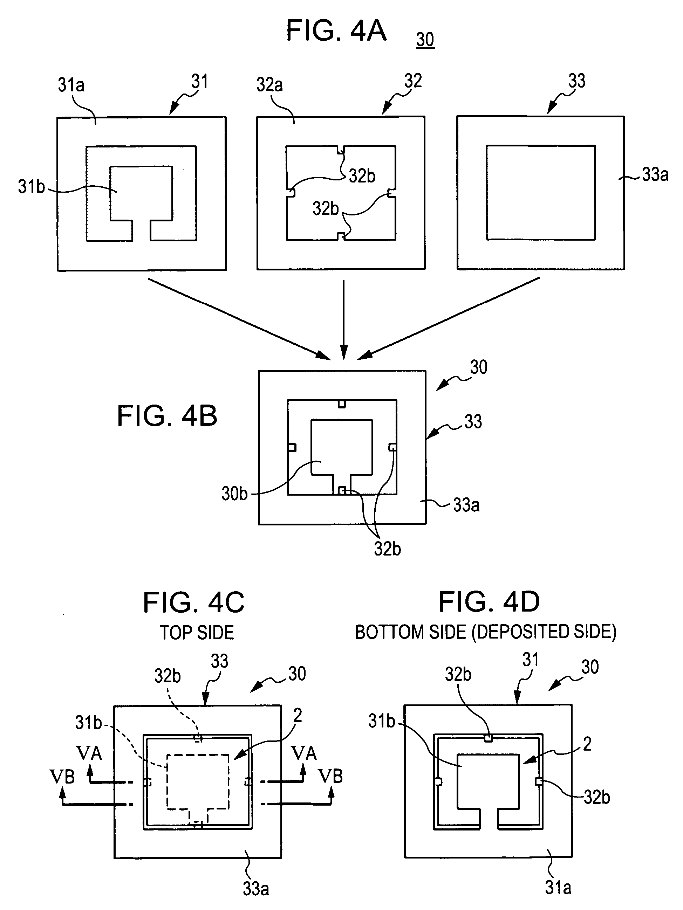

Next, Figs. 3, 4 and 5 are explanatory views showing processes of manufacturing the heat radiating quartz plate of the invention. Fig. 3 shows a process of cutting quartz lumbered from quartz raw stone into quartz plates, and Fig. 4 shows a process of forming a metal film.

First, Fig. 3A is a diagram showing quartz raw stone 20, and a rectangular lumbered quartz 21 shown in Fig. 3B is obtained by cutting portions from the quartz raw stone 20 by only an effective length in Y-direction. In Fig. 3C, a groove 21a is formed in a Y direction as a marker on an outer peripheral surface of the lumbered quartz 21. Then, in Fig. 3D, the lumbered quartz 21 is cut along a cut surface L that is parallel to an X axis and a Z axis at constant intervals in the Y axial direction, so that two pieces of the quartz plates shown in Fig. 3E are obtained.

The AR film is formed on both main surface of the quartz plate 2, after the quartz plate 2 is roughly finished by a lapping process and mirror-finished by a polishing process.

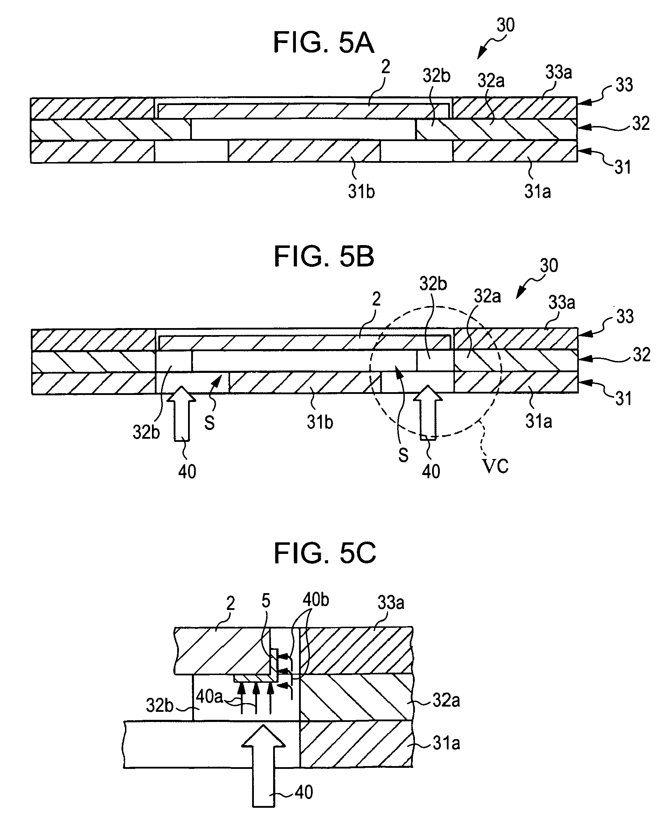

Figs. 4 and 5 show examples of the configuration of a deposition jig which is used for forming a metal film in an arbitrary position of a non-optical region of the quartz plate by means of deposition. Figs. 4A to 4C are explanatory views showing each layer of the deposition jig and the configuration of the deposition jig. Fig. 5A is a cross-sectional view taken along the line VA-VA of Fig. 4C, Fig. 5B is a cross-sectional view taken along the line VB-VB of Fig. 4C, and Fig. 5C is an enlarged view of the main parts of Fig. 5B.

The deposition jig 30 functions as a mask for forming deposition material only in an arbitrary region along the periphery of the quartz plate in a deposition furnace while supporting the quart plate 2.

The deposition jig 30, as shown in Fig. 4A, is composed of three sheet-like frame body having a lowermost layer 31, an intermediate layer 32, and a uppermost layer 33. Fig. 4B is a plan view showing an assembled state in which the lowermost layer 31, the intermediate layer 32, and the uppermost layer 33 are sequentially laminated in this order so as to form the deposition jig 30.

The lowermost layer 31 is formed of a frame body 31a and a mask part 31b protruding at the center, and the mask part 31b functions as a mask shielding the effective optical range of the quartz plate 2. The intermediate layer 32 is formed of a frame body 32a and small protrusions 32b. The frame body 32a has a shape corresponding to the frame body 31a of the lowermost layer 31, and the small protrusions 32b protrude toward the center from predetermined positions (central portions of the respective four sides in this embodiment) of an inner periphery of the frame body 32a. The small protrusions 32b are in contact with an outer periphery of the quartz plate 2 so as to support the quart plate 2. The uppermost layer 33 is formed of a frame body 33a that is has a shape corresponding to the respective frame bodies 31a and 32a of the lowermost layer 31 and intermediate layer 32.

Fig. 4C shows a state in which the quartz plate 2 is disposed on the central portion of the frame body as seen from above the jig shown in Fig. 4B, Figs. 4D shows the state as seen from below.

Fig. 5A is a cross-sectional view showing a state in which the quartz plate 2 is supported on the small protrusion 32b provided on the intermediate layer 32 of the disposition jig 30, and the mask part 31b provided on the lowermost layer 31 faces the bottom surface of the quartz plate 2 with a gap. In addition, an interval S is formed between each small protrusion 32b and the periphery of the mask part 31b.

Figs. 5B and 5C are diagrams showing a state in which a metal film is formed by attaching a metal material to the quartz plate 2 supported by the deposition jig 30 in a deposition furnace. Deposition substances jumping in a big arrow direction 40 flow toward the quartz plate 2 inside the interval S, and adhere onto one main surface and the outer peripheral surface of each quartz plate through a straight path and a curving path indicated by small arrows 40a and 40b.

The deposition jig described in this embodiment is an example of forming a metal film according to the embodiment of Fig. 2B, the configuration of the jig for obtaining the metal film shown in Figs. 1, 2A, 2C and 2D differs from each other according to ranges where the metal film is formed.

Next, Figs. 6A and 6B are diagrams showing a state before and after a metal film made of aluminum is formed on the quartz plate. The quartz plate 2 is formed in a square whose each side has a length L, the width of the metal film 5 is set to X. In this case, if it is assumed that heat conductivity refers heat radiating efficiency, when the relationship between the width X of the metal film 5 and the length L of one side of the quartz plate is defined as X = L/10, it is clearly known that the heat radiating quartz plate of the invention shown in Fig. 6B has heat-radiation effect 3.2 times that of the quartz plate shown in Fig. 6A. In other words, when each heat-radiation effect of the quartz plate shown in Fig. 6A and the heat radiating quartz plate shown in Fig. 6B is equal, the area of the heat radiating quartz plate of the invention can be up to 70% smaller than that of the quartz plate of Fig. 6A.

To be more specific about this, the surface area of the quartz plate 2 of Fig. 6A is L². Meanwhile, the surface area of the quartz plate part of the heat radiating quartz plate of Fig. 6B is L², and the surface area of the metal film 5 is 2LX + 2X(L- X) = 4X(L - X). Total area of the individual parts of the heat radiating quartz plate 1 of Fig. 6B is 4X(L - X) + L².

Here, when the metal film 5 is made of aluminum, heat conductivity of quartz is 0.14 W/m·C and heat conductivity of aluminum is 0.86 W/m·C.

In this case, assuming that the thickness of the plate and the film is constant and only the surface area is considered, when multiplying heat conduction by the surface area, Fig. 6A can be compared with Fig. 6B.

The index of heat-dissipation of the heat dissipation quartz 1 of Fig. 6B is 0.86 x {4X(L - X) + 0.14L²}, and the index of heat-dissipation of the quartz 2 of Fig. 6A is 0.14L².

Therefore, with the heat dissipation quartz 1 of the invention, heat-radiation effect is expectedly {3.44X(L - X) + 0.14L²}/0.14L² times that of the quartz 2 alone.

In addition, as the metal film 5 is disposed on the periphery of the quartz plate, the metal film functions as a damper; therefore, it is possible to significantly prevent defects from occurring on ends of quartz pieces due to collusion of the quartz pieces.

By disposing the heat radiating quartz plate of the invention on a polarizing plate used in various optical apparatus, such as a liquid crystal projector, it is possible to significantly improve heat-radiation effect with the heat radiating quartz plate having the same area as that of a quart plate according to the related art. Therefore, it is possible to improve heat dissipation effect and achieve miniaturization at the same time by making small the quartz plate. Further, the application of the polarizing plate is not limited to the liquid crystal projector, it can be applied to general optical apparatus utilizing a liquid crystal light valve or the like.

## Claims

1. A heat radiating quartz plate disposed on the surface of a polarizing plate, comprising:
a metal film which is disposed along an outer periphery of a quartz plate corresponding to the outside of an effective optical range of the polarizing plate.

2. The heat radiating quartz plate according to Claim 1,
wherein the metal film is formed along a periphery of at least one main surface of the quartz plate.

3. The heat radiating quartz plate according to Claim 1,
wherein the metal film is formed along at least portions of the periphery of the quartz plate.

4. A polarizing plate, comprising:
the heat radiating quartz plate according to anyone of the claims 1 to 3.

5. An optical mechanism, comprising:
the polarizing plate according to Claim 4.
